# EUROPEAN PATENT APPLICATION

(11) **EP 3 150 067 A1**
(43) Date of publication of application: **05.04.2017**
(21) Application number: 15799853.5
(22) Date of filing: 24.02.2015
(51) Int. Cl.: A01N 1/02

(54) **ORGAN PRESERVATION SOLUTION**

(30) Priority: 30.05.2014 JP 2014112424
(71) Applicant: SBI Pharmaceuticals Co., Ltd., Tokyo 106-6020 (JP); National Center For Child Health And Development, Tokyo 157-8535 (JP)
(72) Inventor: TANAKA, Tohru, Tokyo 106-6020 (JP); NAKAJIMA, Motowo, Tokyo 106-6020 (JP); OTA, Urara, Kobe-shi Hyogo 650-0047 (JP); ITO, Hidenori, Tokyo 106-6020 (JP); RII, Ko, Tokyo 157-8535 (JP)
(74) Representative: Script IP Limited
(86) International application number: PCT/JP2015/000928
(87) International publication number: WO 2015/182019

(57) **Abstract**

Provided is an organ preservation solution for use in transplantation, which is capable of effectively preventing the occurrence of ischemia-reperfusion injury. Prepared is an organ preservation solution comprising a mixture of the following components: (a) potassium chloride, disodium hydrogen phosphate, sodium dihydrogen phosphate, L-ascorbic acid, L-ascorbic acid phosphate ester, and D-glucose; (b) potassium chloride, disodium hydrogen phosphate, sodium dihydrogen phosphate, L-ascorbic acid, L-ascorbic acid phosphate ester, glycine, and D-glucose; (c) potassium chloride, disodium hydrogen phosphate, sodium dihydrogen phosphate, L-ascorbic acid, L-ascorbic acid phosphate ester, L-cysteine, glycine, and D-glucose; or (d) potassium chloride, disodium hydrogen phosphate, sodium dihydrogen phosphate, L-ascorbic acid, L-ascorbic acid phosphate ester, L-cysteine, glycine, an iron compound, and D-glucose.

## Description

### Technical Field

The present invention relates to an organ preservation solution, and more specifically to an organ preservation solution prepared by mixing L-ascorbic acid and L-ascorbic acid phosphate ester.

### Background Art

Organ preservation solution has been known to be a liquid used for perfusion and/or immersion of an excised organ upon organ transplantation. Organs existing in a living body fall into necrosis if blood flows are interrupted for a long period of time. Thus, various methods have been developed to transport an organ excised for transplantation for a long period of time. Among the developed methods, the most clinically applied method is a simple cooling method. The organ preservation solution is mainly used for this simple cooling method. The excised organ is perfused with the organ preservation solution, and the organ is then immersed in the same cooled organ preservation solution after completion of the excision, so that necrosis can be prevented.

The organ preservation solutions generally used in the current clinical sites for organ transplantation are University of Wisconsin Solution (University of Wisconsin: UW solution/kidney, liver, pancreas, etc.), Euro-Collins Solution (Euro-Collins: EC solution/kidney), Celsior (registered trademark/heart), Lactated Ringer's Solution (lung), histidine-tryptophan-ketoglutarate solution (Histidine-tryptophan-ketoglutarate: HTK solution/liver, heart, pancreas, kidney, and small intestine), ET-Kyoto Solution, etc. The organ preservation solution acts as a buffer, and also, it is devised such that sugar is added to the organ preservation solution to prevent the swelling of cells by freezing, or such that an antioxidant is added thereto to prevent the occurrence of ischemia-reperfusion injury.

The term "ischemia-reperfusion injury" is used herein to mean an injury caused by provoking generation of various toxic substances in microcirculation of organs and/or tissues in an ischemic state, when blood reperfusion occurs in the organs and/or tissues. The ischemia-reperfusion injury is often observed after organ transplantation. Examples of the mechanism of causing the injury can include the mechanism of causing the injury by generation of active oxygen such as superoxide (O₂⁻) or hydroxyl radicals (HO•), or free radicals such as nitric oxide (NO), the mechanism of causing the injury by generation of various types of cytokines, or various types of chemical mediators such as endothelin or arachidonic acid, and the mechanism of causing the injury based on the interaction between activated neutrophils and vascular endothelial cells.

Since ascorbic acid is a strong antioxidant, it is considered to be useful for the removal of active oxygen generated with ischemia-reperfusion injury that is a cause of damaging a transplanted organ. However, such ascorbic acid promptly disappears due to autoxidation (see for example, non-patent document 1). Thus, according to a finding, the ascorbic acid has not been used as a composition for organ preservation solution, but a stabilized-type ascorbic acid, in which a site associated with an oxidation reduction reaction, called "2-glucoside ascorbate," is masked by the binding of glucose, has been added in vitro to an organ preservation solution (see for example, non-patent document 2). It is to be noted that 2-glucoside ascorbate is a prodrug that has no effects unless it enters into a cell, and thus that when such 2-glucoside ascorbate is actually used for preservation of excised organs, the effect of preserving the organs cannot be always obtained.

On the other hand, it has been reported that ascorbic acid can be stably present in a medium for cell culture by adding ascorbic acid and ascorbic acid phosphate at a specific concentration ratio to the medium (see for example, non-patent document 3). However, these results have only demonstrated that ascorbic acid is stably present upon cell culture, and have not demonstrated that the excised organ can retain its function for a long period of time.

Moreover, an organ preservation solution comprising cysteine (see for example, non-patent documents 4 and 5) or glycine (see for example, non-patent documents 6 and 7), and M-KYOTO, which is prepared by further adding a protease inhibitor to the organ preservation solution ET-KYOTO (see for example, non-patent document 8) comprising trehalose that has been relatively frequently used in Japan, have been known.

Other known organ preservation solutions include an organ preservation solution comprising a specific flavonoid glycoside (patent document 1), an organ preservation solution comprising a hepatocyte growth factor (HGF) (patent document 2), an organ preservation solution comprising lecithin-bonded superoxide dismutase (patent document 3), an organ preservation solution comprising a high content of sulfate and a low content of chlorine (patent document 4), an organ preservation solution comprising hydroxyethyl starch with an average molecular weight of 500,000 to 650,000, wherein the molar ratio between potassium ions and sodium ions is 0.4 to 0.8, the pH value is 7.1 to 7.5, the osmotic pressure is 280 to 330 mOsm/L, and the viscosity is 1.8 to 2.5 cp (patent document 5), and a preservation solution comprising rare sugar such as D-allose (patent document 6).

### Prior Art Documents

### Patent Documents

Patent Document 1: Japanese unexamined Patent Application Publication No. 2009-221128
Patent Document 2: Japanese unexamined Patent Application Publication No. 2005-306749
Patent Document 3: Japanese unexamined Patent Application Publication No. 2002-60301
Patent Document 4: Japanese unexamined Patent Application Publication No. 10-245301
Patent Document 5: Japanese unexamined Patent Application Publication No. 9-328401
Patent Document 6: WO 2005/115141

### Non-patent Documents

Non-patent Document 1: Free Radic Res Commun. 1986; 1(6): 349-53.
Non-patent Document 2: Cell Transplant. 2003; 12(6): 599-606.I
Non-patent Document 3: In Vitro Cell. Dev. Biol.--Animal 37: 26-30, January 2001
Non-patent Document 4: Transplant Proc. 2011 Oct; 43(8): 2897-9
Non-patent Document 5: J Heart Lung Transplant. 2005 Sep; 24 (9) : 1369-77.
Non-patent Document 6: Transplantation. 2003 Mar 15; 75(5): 591-8.
Non-patent Document 7: Transpl Int. 1994 May; 7(3): 195-200
Non-patent Document 8: Yonsei Med J. 2004 Dec 31; 45(6): 1107-14.

### Summary of the Invention

### Object to be Solved by the Invention

It is an object of the present invention to provide an organ preservation solution capable of effectively preventing the occurrence of ischemia-reperfusion injury by extension of the total ischemic time.

### Means to Solve the Object

The present inventors have done trials and errors regarding a combination of individual components added to the aforementioned conventionally proposed organ preservation solutions, and the like, and as a result, they have found that an organ preservation solution, which comprises disodium hydrogen phosphate and sodium dihydrogen phosphate, as well as L-ascorbic acid and L-ascorbic acid phosphate ester, and which further comprises potassium chloride, D-glucose, glycine, L-cysteine, and an iron compound, is superior to the currently used organ preservation solutions in terms of prevention of the occurrence of ischemia-reperfusion injury, thereby completing the present invention.

Specifically, the present invention is specified by the following matters.
(1) An organ preservation solution comprising a mixture of potassium chloride, disodium hydrogen phosphate, sodium dihydrogen phosphate, L-ascorbic acid, L-ascorbic acid phosphate ester, and D-glucose.
(2) The organ preservation solution according to the above (1), wherein the mixture further comprises glycine.
(3) The organ preservation solution according to the above (2), wherein the mixture further comprises L-cysteine.
(4) The organ preservation solution according to the above (3), wherein the mixture further comprises an iron compound.
(5) The organ preservation solution according to any one of the above (1) to (4), wherein a concentration of the L-ascorbic acid in the mixture is 0.2 to 0.3 mM, and a concentration of the L-ascorbic acid phosphate ester in the mixture is 0.4 to 0.5 mM.
(6) The organ preservation solution according to any one of the above (1) to (5), wherein a concentration of the disodium hydrogen phosphate in the mixture is 35 to 50 mM, and a concentration of the sodium dihydrogen phosphate in the mixture is 12 to 18 mM.
(7) The organ preservation solution according to any one of the above (1) to (6), wherein the D-glucose is mixed to achieve an osmotic pressure of 326 to 363 mOsm/kg.
(8) The organ preservation solution according to any one of the above (2) to (7), wherein a concentration of the glycine in the mixture is 5 to 15 mM.
(9) The organ preservation solution according to any one of the above (3) to (8), wherein a concentration of the L-cysteine in the mixture is 0.5 to 0.7 mM.
(10) The organ preservation solution according to any one of the above (4) to (9), wherein the iron compound is ferrous sulfate.
(11) A method for preserving an organ using an organ preservation solution according to any one of the above (1) to (10).

### Effect of the Invention

The occurrence of ischemia-reperfusion injury by extension of the total ischemic time can be effectively prevented by immersing an organ to be transplanted in the organ preservation solution of the present invention.

### Brief Description of Drawings

[Figure 1] Figure 1 is a graph showing the results obtained by measuring the time required until the re-beating of a transplanted heart has started, with regard to each of individual mice, which have been subjected to ectopic heart transplantation of a heart immersed for 24 hours in each of an HTK solution, an EC solution, a UW solution, and preservation solutions (a) to (c).
[Figure 2] Figure 2 is a graph showing the results obtained by measuring the time required until the re-beating of a transplanted heart has started, with regard to each of individual mice, which have been subjected to ectopic heart transplantation of a heart immersed for 48 hours in each of an HTK solution, an EC solution, and preservation solutions (a) to (c).
[Figure 3] Figure 3 is a graph showing the results obtained by measuring the time required until the re-beating of a transplanted heart has started, with regard to each of individual mice, which have been subjected to ectopic heart transplantation of a heart immersed for 24 hours in each of a UW solution, a preservation solution (d)3, and a preservation solution (d)6.
[Figure 4] Figure 4 is a graph showing the relationship between the number of days elapsed after transplantation and the heart graft survival percentage, with regard to each of individual mice, which have been subjected to ectopic heart transplantation of a heart immersed for 24 hours in each of a UW solution, a preservation solution (d)3, and a preservation solution (d)6.
[Figure 5] Figure 5 is a graph showing the results obtained by measuring the time required until the re-beating of a transplanted heart has started, with regard to each of individual mice, which have been subjected to ectopic heart transplantation of a heart immersed for 48 hours in each of a UW solution, a preservation solution (d)3, a preservation solution (d)6, and a preservation solution (d)7.
[Figure 6] Figure 6 is a graph showing the relationship between the number of days elapsed after transplantation and the heart graft survival percentage, with regard to each of individual mice, which have been subjected to ectopic heart transplantation of a heart immersed for 48 hours in each of a UW solution, a preservation solution (d)3, a preservation solution (d)6, and a preservation solution (d)7.
[Figure 7] Figure 7 is a graph showing the time required until the re-beating of a transplanted heart has started, with regard to each of individual mice, which have been subjected to ectopic heart transplantation.
[Figure 8] Figure 8 is a graph showing the amounts of LDH and CPK generated in the serum of each mouse, which has been subjected to ectopic heart transplantation.
[Figure 9] Figure 9 is a graph showing the percentage of graft survival of each transplanted heart.
[Figure 10] Figure 10 is a graph showing the ATP level in each excised and/or transplanted heart.
[Figure 11] Figure 11 shows TTC-stained, transplanted heart sections.
[Figure 12] Figure 12 shows the ratio of a perivascular edema region to a perivascular region (upper graphs), and H/E (hematoxylin/eosin)-stained, transplanted heart sections (lower photographs).
[Figure 13] Figure 13 shows transplanted heart sections, which have been stained bluish purple according to an enzyme antibody method using an anti-CD68 antibody (clone: FA-11, manufactured by BioLegend, Inc.).
[Figure 14] Figure 14 shows transplanted heart sections stained according to TUNEL staining.
[Figure 15] Figure 15 is a graph showing the ratio of apoptotic cells in each transplanted heart section.
[Figure 16] Figure 16 shows transplanted heart sections, which have been stained with an anti-8-OHdG antibody according to an enzyme antibody method and have simultaneously been stained with hematoxylin that is used to stain the nucleus blue.
[Figure 17] Figure 17 is a graph showing the ratio of 8-OHdG-positive cells in all cells of each transplanted heart.
[Figure 18] Figure 18 is a graph showing the amount of 8-OHdG in the serum of each mouse, which has been subjected to ectopic heart transplantation.
[Figure 19] Figure 19 includes graphs each showing the expression level of the mRNA of a different type of inflammation/oxidation stress marker-related gene, when the tissues of a heart transplanted into each mouse has been crushed and quantitative RT-PCR has been then carried out thereon. The bars in each graph indicate Naive, Fresh, HTK-48hr-POH24, and c-48hr-POH24 from the left side.

### Mode of Carrying Out the Invention

The organ preservation solution of the present invention is not particularly limited, as long as it is an organ preservation solution (a) comprising a mixture of the following components: potassium chloride, disodium hydrogen phosphate, sodium dihydrogen phosphate, L-ascorbic acid, L-ascorbic acid phosphate ester, and D-glucose; an organ preservation solution (b) comprising a mixture of the following components: potassium chloride, disodium hydrogen phosphate, sodium dihydrogen phosphate, L-ascorbic acid, L-ascorbic acid phosphate ester, glycine, and D-glucose; an organ preservation solution (c) comprising a mixture of the following components: potassium chloride, disodium hydrogen phosphate, sodium dihydrogen phosphate, L-ascorbic acid, L-ascorbic acid phosphate ester, L-cysteine, glycine, and D-glucose; or an organ preservation solution (d) comprising a mixture of the following components: potassium chloride, disodium hydrogen phosphate, sodium dihydrogen phosphate, L-ascorbic acid, L-ascorbic acid phosphate ester, L-cysteine, glycine, an iron compound, and D-glucose. The organ preservation solution of the present invention can be prepared as a mixture, in which the aforementioned components are added to and/or dissolved in distilled water or the like. Moreover, the concentration of each component mixed is not particularly limited, as long as the organ preservation solution, which is used for organs to be transplanted, can achieve the object of the present invention.

Among the aforementioned components, inorganic salts are ionized and are present in a solution. Accordingly, the organ preservation solution (a) of the present invention comprises a chloride ion, a potassium ion, a sodium ion, HPO₄²⁻, H₂PO₄⁻, L-ascorbic acid, L-ascorbic acid phosphate ester, and D-glucose; the organ preservation solution (b) comprises a chloride ion, a potassium ion, a sodium ion, HPO₄²⁻, H₂PO₄⁻, L-ascorbic acid, L-ascorbic acid phosphate ester, glycine, and D-glucose; the organ preservation solution (c) comprises a chloride ion, a potassium ion, a sodium ion, HPO₄²⁻, H₂PO₄⁻, L-ascorbic acid, L-ascorbic acid phosphate ester, L-cysteine, glycine, and D-glucose; and the organ preservation solution (d) comprises a chloride ion, a potassium ion, a sodium ion, HPO₄²⁻, H₂PO₄⁻, L-ascorbic acid, L-ascorbic acid phosphate ester, L-cysteine, glycine, an iron ion, and D-glucose.

For example, the concentration of potassium chloride in the mixture can be 5 to 25 mM, preferably 10 to 20 mM, and more preferably 13 to 17 mM. That is, the concentration of a chloride ion or a potassium ion in the mixture can be 5 to 25 mM, preferably 10 to 20 mM, and more preferably 13 to 17 mM.

The concentration of disodium hydrogen phosphate in the mixture can be 25 to 60 mM, preferably 35 to 50 mM, and more preferably 40 to 45 mM. That is, the concentration of HPO₄²⁻ in the mixture can be 25 to 60 mM, preferably 35 to 50 mM, and more preferably 40 to 45 mM. Moreover, the concentration of sodium dihydrogen phosphate in the mixture can be 10 to 20 mM, preferably 12 to 18 mM, and more preferably 14 to 16 mM. That is, the concentration of H₂PO₄⁻ can be 10 to 20 mM, preferably 12 to 18 mM, and more preferably 14 to 16 mM. Furthermore, the concentration of a sodium ion in the mixture can be 35 to 80 mM, preferably 47 to 68 mM, and more preferably 54 to 61 mM.

The concentration ratio between disodium hydrogen phosphate and potassium chloride is preferably 4:1 to 2:1. In addition, the concentration ratio between sodium dihydrogen phosphate and potassium chloride is preferably 1:2 to 2:1. Moreover, the concentration ratio between disodium hydrogen phosphate and sodium dihydrogen phosphate is preferably 4:1 to 2:1.

The concentration of L-ascorbic acid in the mixture can be 0.1 to 0.5 mM, preferably 0.2 to 0.4 mM, and more preferably 0.2 to 0.3 mM. The concentration ratio between L-ascorbic acid and potassium chloride is preferably 1:50 to 1:70.

The concentration of L-ascorbic acid phosphate ester in the mixture can be 0.3 to 0.6 mM, preferably 0.4 to 0.5 mM, and more preferably 0.43 to 0.47 mM. The concentration ratio between L-ascorbic acid phosphate ester and potassium chloride is preferably 1:25 to 1:40. In addition, the concentration ratio between L-ascorbic acid and L-ascorbic acid phosphate ester is preferably 1:1 to 1:3.

The concentration of glycine in the mixture can be 3 to 20 mM, preferably 5 to 15 mM, and more preferably 8 to 12 mM. The concentration ratio between glycine and potassium chloride is preferably 1:1 to 1:2.

The concentration of L-cysteine in the mixture can be 0.3 to 0.9 mM, preferably 0.5 to 0.7 mM, and more preferably 0.60 to 0.65 mM. The concentration ratio between L-cysteine and potassium chloride is preferably 1:20 to 1:25.

The concentration of D-glucose contained in the mixture can be such that the osmotic pressure of the organ preservation solution is 270 to 450 mOsm/kg, preferably 300 to 390 mOsm/kg, and more preferably 326 to 363 mOsm/kg.

The iron compound comprised in the mixture can be either an organic salt or an inorganic salt. Examples of the inorganic salt include ferric chloride, iron sesquioxide, ferrous sulfate, and ferrous pyrophosphate. Examples of the organic salt include: carboxylates, for example, citrates that are hydroxycarboxylates, such as ferrous citrate, iron sodium citrate, sodium ferrous citrate, and iron ammonium citrate; organic acid salts such as ferric pyrophosphate, iron lactate, ferrous gluconate, iron sodium diethylenetriaminepentaacetate, iron ammonium diethylenetriaminepentaacetate, iron sodium ethylenediaminetetraacetate, iron ammonium ethylenediaminetetraacetate, iron sodium dicarboxymethyl glutamate, iron ammonium dicarboxymethyl glutamate, ferrous fumarate, iron acetate, iron oxalate, ferrous succinate, and iron and sodium succinate citrate; and heme iron, iron dextran, iron triethylenetetramine, lactoferrin iron, transferrin iron, iron chlorophyllin sodium, ferritin iron, saccharated iron oxide, and sulfide glycine iron. Among these, ferrous sulfate is preferable. The concentration of the iron compound, namely, the concentration of the iron ion can be 0.1 µM to 10 mM, and preferably 0.5 µM to 5 mM.

In addition to the aforementioned components, the organ preservation solution of the present invention can also comprise, as appropriate, water, a normal saline, various types of buffers, vitamins, 5-aminolevulinic acid, sugars, a protease inhibitor, a flavonoid glycoside, a hepatocyte growth factor (HGF), lecithin-bonded superoxide dismutase, hydroxyethyl starch, an antioxidant, an antiinflammatory cytokine, regulatory T cells, monocytes, dendritic cells, macrophages, and the like.

The pH of the organ preservation solution of the present invention is pH 6 to 8, preferably pH 6.5 to 7.5, and more preferably around pH 7. In addition, the organ preservation solution of the present invention is generally used at a temperature of approximately 0°C. The time required for immersion of an organ in the organ preservation solution of the present invention, namely, the cold ischemia (cold ischemic time) is within 48 hours, preferably within 24 hours, and more preferably within 12 hours. Even if the immersion time is from 24 to 48 hours, the occurrence of ischemia-reperfusion injury can be effectively prevented.

The organ as a target, to which the organ preservation solution of the present invention is to be applied, is not particularly limited, as long as it is an organ that can be transplanted. The target organs are not only an organ excised from a donor, but can also be grafts or cells produced in vitro, or tissues and/or organs artificially constructed by regenerative medicine technology, or an organ and the like produced from pluripotent cells. In addition, examples of the type of such an organ include kidney, liver, heart, pancreas, lung, small intestine, eye ball, cornea, hair, and skin. Among others, kidney, liver, heart, pancreas, lung, and small intestine can be preferably used.

Organ transplantation with the use of the organ preservation solution of the present invention can be carried out according to an ordinary method. The organ transplantation can be either orthotopic organ transplantation, in which an organ provided by a donor or the like is immersed in the organ preservation solution of the present invention, the corresponding organ is then removed from a recipient, and the organ of the donor is transplanted into the same place as that in the recipient, or ectopic organ transplantation, in which an organ provided by a donor or the like is transplanted into another site in a recipient, while the organ in the recipient remains as is.

Examples of the donor and/or recipient used in the organ transplantation with the use of the organ preservation solution of the present invention include mammals such as a human, a baboon, a bovine, a swine, a dog, a cat, a rabbit, a rat, or a mouse. The aspect of such organ transplantation is not particularly limited, as long as it is an aspect in which an organ can be transplanted from a donor to a recipient. Examples of the aspect of organ transplantation include: homoplastic organ transplantation such as from a mouse to a mouse, from a rat to a rat, from a rabbit to a rabbit, from a dog to a dog, from a cat to a cat, from a swine to a swine, from a monkey to a monkey, from a baboon to a baboon, or from a human to a human; and heteroplastic organ transplantation such as from a swine to a human, from a bovine to a human, from a monkey to a human, or from a baboon to a human.

Hereinafter, the present invention will be more specifically described in the following Examples. However, these examples are not intended to limit the technical scope of the present invention.

### Examples

### Example 1

### (Preparation of preservation solution)

Three types of newly prepared organ preservation solutions (preservation solution (a) to preservation solution (c)) were used as examination subjects. The details of components added to and dissolved in distilled water are shown in the following Table 1. When an organ to be transplanted is immersed in each of these preservation solutions over the latest allowable time for ischemia that has been determined with regard to conventional preservation solution products, whether or not the functions of the organ could be maintained after completion of the transplantation was studied. Specifically, when the heart of a donor mouse that had been immersed in each of the above described three types of preservation solutions was transplanted into an isogenic mouse, the time required until the starting of the re-beating of the heart after the transplantation was used as an indicator. As well-known currently available products, three types of preservation solutions, namely, Euro-Collins Solution (EC solution), histidine-tryptophan-ketoglutarate solution (HTK solution), University of Wisconsin Solution (University of Wisconsin: UW solution) were used for comparative investigation. The details of components of these three types of currently available products are shown in the following Table 2.

**[Table 1]**

| Component | Preservation solution (a) | Preservation solution (b) | Preservation solution (c) |
|---|---|---|---|
| Potassium chloride (KCl) | 15 mM | 15 mM | 15 mM |
| Disodium hydrogen phosphate dodecahydrate | 42.5 mM | 42.5 mM | 42.5 mM |
| Sodium dihydrogen phosphate dihydrate | 15 mM | 15 mM | 15 mM |
| L-Ascorbic acid | 0.25 mM | 0.25 mM | 0.25 mM |
| L-Ascorbic acid phosphate ester magnesium salt n-hydrate | 0.45 mM | 0.45 mM | 0.45 mM |
| L-Cysteine hydrochloride monohydrate | - | - | 0.63 mM |
| Glycine | - | 10 mM | 10 mM |
| D(+)-Glucose (added to achieve osmotic pressure as shown in right columns) | 326-363 mOsm/kg | 326-363 mOsm/kg | 326-363 mOsm/kg |

**[Table 2]**

| Component | EC solution | HTK solution | UW solution |
|---|---|---|---|
| Potassium chloride | 15 mM | 9 mM | - |
| K₂HPO₄ | 42 mM | - | - |
| KH₂PO₄ | 15 mM | - | 25 mM |
| NaHCO₃ | 10 mM | - | - |
| Potassium lactobionate | - | - | 100 mM |
| MgSO₄ | - | - | 5 mM |
| Raffinose | - | - | 30 mM |
| Adenosine | - | - | 5 mM |
| Glutathione | - | - | 3 mM |
| Allopurinol | - | - | 1 mM |
| Hydroxyethyl starch | - | - | 50 g/L |
| NaCl | - | 15 mM | - |
| Potassium hydrogen 2-ketoglutarate | - | 1 mM | - |
| MgCl_{2·}6H₂O | - | 4 mM | - |
| Histidine hydrochloride monohydrate | - | 18 mM | - |
| Histidine | - | 180 mM | - |
| Tryptophan | - | 2 mM | - |
| Mannitol | - | 30 mM | - |
| CaCl₂·H₂O | - | 0.015 mM | - |
| D(+)-Glucose (added to achieve osmotic pressure as shown in right columns) | 340-350 mOsm/kg | 310 mOsm/kg | 320 mOsm/kg |

### (Mouse ectopic heart transplantation 1)

As a donor mouse which provided a heart to be transplanted, and as a recipient mouse, to which the heart excised from the donor mouse was to be transplanted, C57BL/6NCrSlc (H²-K^{b}) mice (male, 6- to 10-week-old) were used. With regard to the procedures for the operation of ectopic heart transplantation into a mouse, the descriptions of Wu et al. (European Heart Journal (2011) 32, 509-516) were referred to. The summary thereof will be described below.

The thorax of the donor mouse was opened under anesthesia, the superior vena cava of the heart was ligated, and the brachiocephalic artery was cut off. After perfusion with 1 mL of a heparin normal saline (100 IU/mL), the preservation solutions (a) to (c) shown in the above Table 1, or three types of preservation solutions as currently available products for comparative investigation, which are shown in the above Table 2 (1 mL each), were each perfused through the inferior vena cava of each donor mouse, and the preservation solutions were each discharged from the brachiocephalic artery. The inferior vena cava of each donor mouse was ligated, the ascending aorta and the pulmonary artery were then cut off, and all of other blood vessels were then ligated. Subsequently, the heart excised from the donor mouse was immersed at 0°C for 24 hours in any one (15 mL each) of the above described preservation solutions (a) to (c) and the three types of preservation solutions as currently available products shown in Table 2.

The heart excised from each donor mouse, which had been immersed in each of the above described preservation solutions, was transplanted into each recipient mouse. Under general anesthesia, the abdomen of the recipient mouse was opened, and thereafter, the ascending aorta of the heart excised from the donor mouse was anastomosed to the abdominal aorta of the recipient mouse, and the inferior vena cava of the donor mouse was anastomosed to the inferior vena cava of the recipient mouse, so that the operation was completed. The time required for warm ischemia upon the organ transplantation was always set at 40 minutes.

### (Re-beating time of heart transplanted by ectopic heart transplantation 1)

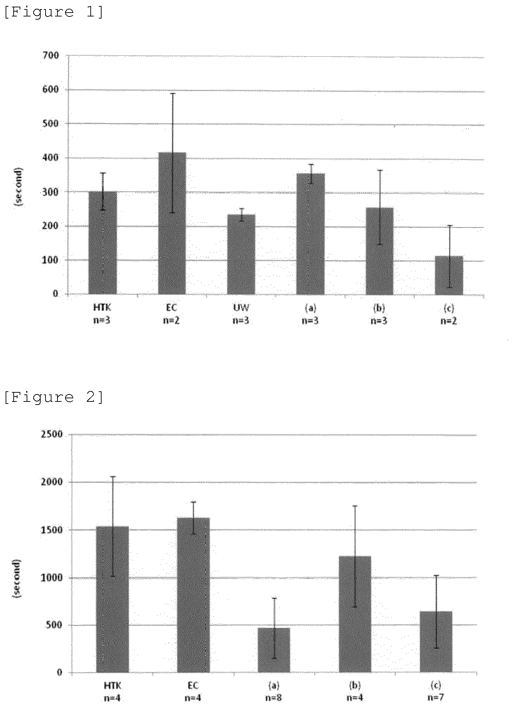

With regard to the excised heart after immersion for 24 hours in each of the above described preservation solutions, the time required until the re-beating of the transplanted heart started, with regard to each of individual mice, which had been subjected to the ectopic heart transplantation was measured. Hereafter, whether or not the re-beating of the heart has started is determined by palpation. The results are shown in Figure 1.

### (Result 1)

As is clear from Figure 1, the time required for the starting of the re-beating of the heart immersed in the UW solution was approximately 240 seconds, and the time required for the starting of the re-beating of the heart was the shortest among the three types of currently available products. On the other hand, the time required for the starting of the re-beating of the heart immersed in the preservation solution (c) was approximately 100 seconds. Thus, the required time in the case of using the preservation solution (c) was reduced to a half or less of that in the case of using the UW solution. In addition, in the case of using the preservation solution (b) prepared by removing L-cysteine hydrochloride monohydrate from the preservation solution (c) comprising potassium chloride, disodium hydrogen phosphate dodecahydrate, sodium dihydrogen phosphate dihydrate, L-ascorbic acid, L-ascorbic acid phosphate ester magnesium salt n-hydrate, L-cysteine hydrochloride monohydrate, glycine, and D(+)-glucose, the time required for the starting of the re-beating of the heart was approximately equivalent to that in the case of using the UW solution. Also, in the case of using the preservation solution (a) prepared by removing L-cysteine hydrochloride monohydrate and glycine from the preservation solution (c), the time required for the starting of the re-beating of the heart was reduced, in comparison to that in the case of using the EC solution. Accordingly, in the case where the organ to be transplanted was immersed in any one of the preservation solutions (a) to (c), it was confirmed that the time required for the starting of the re-beating of the heart was reduced, in comparison to the case of using the three types of currently available products, namely, the HTK solution, the EC solution, and the UW solution, and it was suggested that the time required from suspension of blood flow to an organ and the subsequent transplantation of the organ, to blood reperfusion, namely, the latest allowable time for the ischemia of an organ, would be prolonged, in comparison to the case of preserving the organ using the currently available products.

### Example 2

### (Mouse ectopic heart transplantation 2)

Ectopic heart transplantation was carried out on mice in accordance with the procedures described in the above Example 1 (Mouse ectopic heart transplantation 1), with the exceptions that the time required for immersion of the heart in each preservation solution was set at 48 hours, and that the currently available products, HTK solution and EC solution, were used for comparative investigation. With regard to each of individual mice, which had been subjected to the ectopic heart transplantation, the time required until the re-beating of the transplanted heart started was measured. The results are shown in Figure 2.

### (Result 2)

As is clear from Figure 2, the time required for the starting of the re-beating of the heart was 1,500 seconds or more in both cases of using the HTK solution and the EC solution. On the other hand, the time required for the starting of the re-beating of the heart in the case of using the preservation solution (a) was approximately 500 seconds, the time required for the starting of the re-beating of the heart in the case of using the preservation solution (b) was approximately 1,250 seconds, and the time required for the starting of the re-beating of the heart in the case of using the preservation solution (c) was approximately 600 seconds. Therefore, all of the preservation solutions (a) to (c) exhibited a high effect of reducing the time required for the starting of the re-beating of the heart, in comparison to the currently available products. However, when the immersion time was set at 48 hours, the death rate of recipient mice was increased.

### Example 3

### (Mouse ectopic heart transplantation 3)

Preservation solutions (d) were prepared by adding iron(II) sulfate to the above described preservation solution (c), and were used as an iron-added series of preservation solutions. Further studies were continued. The details of components of each preservation solution are shown in the following Table 3.

**[Table 3]**

| Component | Preservation solution (d) 3 | Preservation solution (d) 6 | Preservation solution (d) 7 |
|---|---|---|---|
| Potassium chloride (KCl) | 15 mM | 15 mM | 15 mM |
| Disodium hydrogen phosphate dodecahydrate | 42.5 mM | 42.5 mM | 42.5 mM |
| Sodium dihydrogen phosphate dihydrate | 15 mM | 15 mM | 15 mM |
| L-Ascorbic acid | 0.25 mM | 0.25 mM | 0.25 mM |
| L-Ascorbic acid phosphate ester magnesium salt n-hydrate | 0.45 mM | 0.45 mM | 0.45 mM |
| L-Cysteine hydrochloride monohydrate | 0.63 mM | 0.63 mM | 0.63 mM |
| Glycine (Glycine) | 10 mM | 10 mM | 10 mM |
| FeSO₄ | 0.5 µM | 5 mM | 2.75 mM |
| D(+)-Glucose (added to achieve osmotic pressure as shown in right columns) | 326-363 mOsm/kg | 326-363 mOsm/kg | 326-363 mOsm/kg |

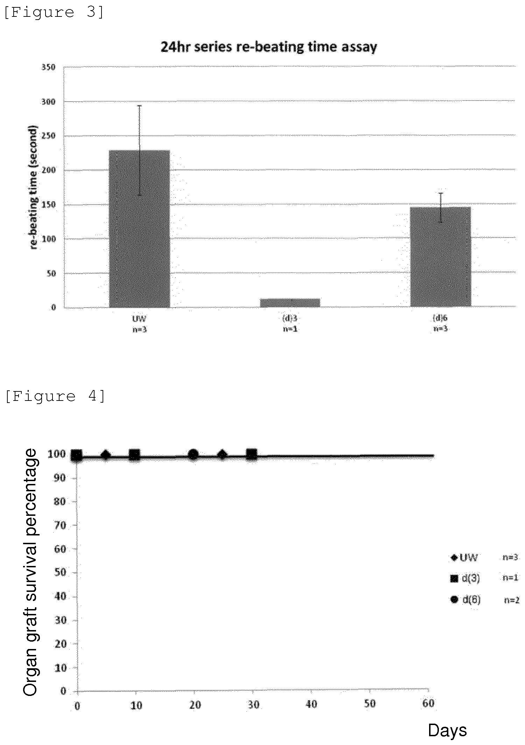

Ectopic heart transplantation was carried out on mice in accordance with the procedures described in the above Example 1 (Mouse ectopic heart transplantation 1), with the exceptions that the preservation solution (d)3 and the preservation solution (d)6 were used as an iron-added series of preservation solutions, and that the currently available product, UW solution, was used for comparative investigation. After the organ was immersed in each preservation solution for 24 hours, it was transplanted into each of individual mice by ectopic heart transplantation. Thereafter, the time required until the re-beating of the transplanted heart started with regard to each mouse was measured. The results are shown in Figure 3.

Moreover, with regard to each of the individual mice, which had been subjected to the above described ectopic heart transplantation, the time required for termination of a transplanted heart after transplantation of the heart was measured. The results are shown in Figure 4.

### (Result 3-1)

As is clear from Figure 3, the time required for the starting of the re-beating of the heart in the case of using the UW solution as a currently available product was approximately 230 seconds, whereas the time required for the starting of the re-beating of the heart in the case of using the preservation solution (d)3 was 12 seconds, and that in the case of using the preservation solution (d)6 was approximately 144 seconds. Accordingly, the preservation solutions (d)3 and (d)6 exhibited a significant effect of reducing the time required for the starting of the re-beating of the heart, in comparison to the currently available product, UW solution. In particular, the preservation solution (d)3 exhibited a higher effect of reducing the time required for the starting of the re-beating of the heart than the preservation solution (c) did in the above Example 1.

### (Result 3-2)

As described above, an excised heart was immersed in a cold preservation solution for 24 hours, and the heart was then transplanted into a recipient mouse. Thereafter, whether or not the heart survived was determined by examining the re-beating of the heart by palpation, and the day at which termination of the beating of the heart was confirmed was defined as a heart dropped date. That is to say, with regard to individual mice that had been subjected to the above described ectopic heart transplantation, the time required for termination of the beating of the transplanted heart was measured. As is found from Figure 4, in the case of using the preservation solution (d)3 and the preservation solution (d)6, the survival of the heart could be confirmed, as in the case of using the UW solution.

### Example 4

### (Mouse ectopic heart transplantation 4)

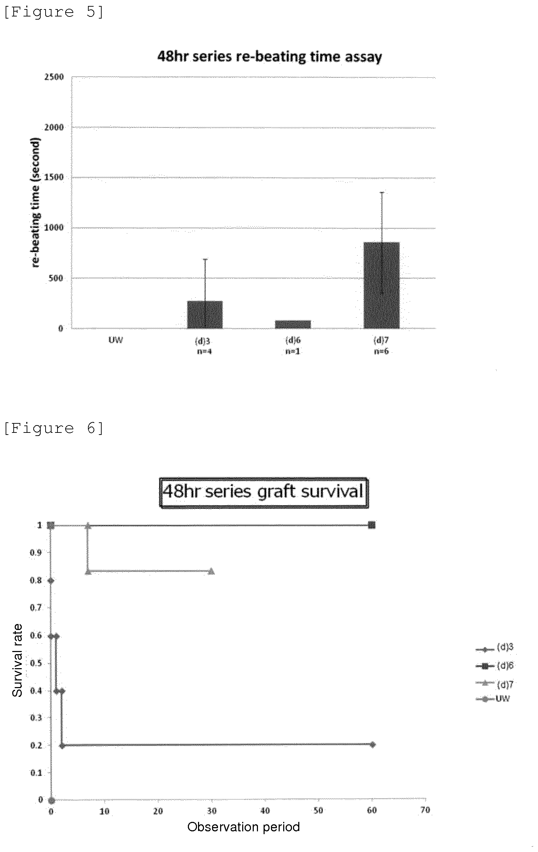

Ectopic heart transplantation was carried out on mice in accordance with the procedures described in the above Mouse ectopic heart transplantation 1, with the exceptions that the preservation solution (d)3, the preservation solution (d)6, and the preservation solution (d)7 were used as an iron-added series of preservation solutions, that the currently available product, UW solution, was used for comparative investigation, and that the time required for immersion of the heart in each preservation solution was set at 48 hours. The time required until the re-beating of the transplanted heart started, with regard to each of individual mice, which had been subjected to the ectopic heart transplantation was measured. The results are shown in Figure 5.

Moreover, with regard to the individual mice, which had been subjected to the above described ectopic heart transplantation, the time required for termination of a transplanted heart was measured in the same manner as that of Example 3. The results are shown in Figure 6.

### (Result 4-1)

There were no individuals in which the re-beating of the transplanted heart was confirmed in the case of using the UW solution. The time required for the starting of the re-beating of the heart in the case of using the preservation solution (d)3 was approximately 260 seconds, that in the case of using the preservation solution (d)6 was approximately 90 seconds, and that in the case of using the preservation solution (d)7 was approximately 820 seconds. In all cases of using the preservation solutions (d)3, (d) 6, and (d)7, the re-beating of the transplanted heart was observed.

### (Result 4-2)

In the case of mice into each of which an excised heart immersed in the UW solution was transplanted, the re-beating of the transplanted heart was not observed;

In the case of mice (n = 5) into each of which an excised heart immersed in the preservation solution (d)3 was transplanted, a mouse had the beating of the transplanted heart for a long period of time. More specifically, the beating of the transplanted heart was terminated in two mice on the first day (Day 0), in one mouse on Day 1, and in one mouse on Day 2. However, at the time point of 60 days, the beating of the transplanted heart was continued in one mouse;

In the case of a mouse (n = 1) into which an excised heart immersed in the preservation solution (d)6 was transplanted, the mouse had the beating of the transplanted heart for a long period of time. More specifically, at the time point of 60 days, the beating of the transplanted heart was continued in one mouse; and

In the case of mice (n = 6) into each of which an excised heart immersed in the preservation solution (d)7 was transplanted, some mice had the beating of the transplanted heart for a long period of time. More specifically, the beating of the transplanted heart was terminated in one mouse on Day 7, but at the time point of 30 days, the beating of the transplanted heart was continued in five mice.

Hereafter, the above described preservation solution (c) was further studied using HTK as a control.

### Example 5

### (Mouse ectopic heart transplantation 5)

The operation of ectopic heart transplantation was performed on mice by the procedures described in the above Example 1 (Mouse ectopic heart transplantation 1), with the exceptions that the preservation solution (c) or the HTK solution was used as a preservation solution, and that the heart excised from each donor mouse was immersed in the preservation solution for 24 hours or for 48 hours, so as to prepare ectopic heart transplant mice.

### (Re-beating time of heart transplanted by ectopic heart transplantation 2)

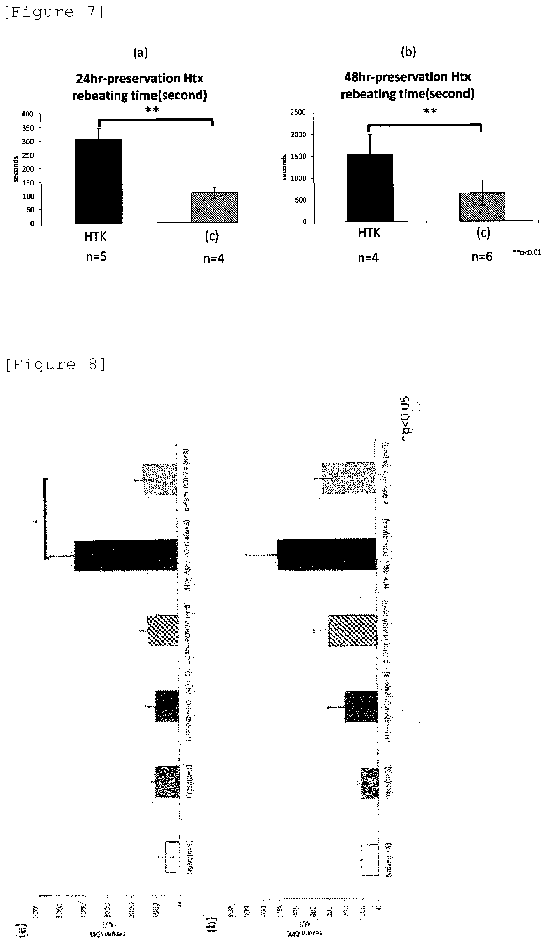

With regard to each of individual mice, which had been subjected to the ectopic heart transplantation, the time required until the re-beating of the transplanted heart started was measured. It is to be noted that all of the re-beating hearts were measured within 30 minutes. When the re-beating of the heart did not start even 30 minutes after reperfusion, it was counted as 1,800 seconds. The results are shown in Figures 7(a) and 7(b).

### (Result 5)

As is clear from Figure 7, in both cases where the time required for immersion of the excised heart in the preservation solution was 24 hours (see Figure 7(a)) and 48 hours (see Figure 7(b)), the time required for the starting of the re-beating of the heart transplanted into a recipient mouse was shorter in the case of immersion of the excised heart in the preservation solution (c) than in the case of immersion in the HTK solution. When the immersion time was 24 hours, the time required for the starting of the re-beating of the transplanted heart immersed in the preservation solution (c) (approximately 100 seconds) was approximately one third of the time required for the starting of the re-beating of the transplanted heart immersed in the HTK solution (approximately 300 seconds). When the immersion time was 48 hours, the time required for the starting of the re-beating of the transplanted heart immersed in the preservation solution (c) (approximately 600 seconds) was approximately two fifths of the time required for the starting of the re-beating of the transplanted heart immersed in the HTK solution (approximately 1,500 seconds).

### Example 6

### (Mouse ectopic heart transplantation 6)

The operation was performed by the same procedures as those described in the above Example 5 (Mouse ectopic heart transplantation 5), so as to prepare ectopic heart transplant mice.

### (Studies regarding effect of suppressing acute inflammation immediately after transplantation)

The following mice were studied.
(1) A mouse, into which an excised heart immersed in the preservation solution (c) for 24 hours has been transplanted and 24 hours have passed after completion of the operation (c-24hr-POH24);
(2) A mouse, into which an excised heart immersed in the preservation solution (c) for 48 hours has been transplanted and 24 hours have passed after completion of the operation (c-48hr-POH24);
(3) A mouse, into which an excised heart immersed in the HTK solution for 24 hours has been transplanted and 24 hours have passed after completion of the operation (HTK-24hr-POH24); and
(4) A mouse, into which an excised heart immersed in the HTK solution for 48 hours has been transplanted and 24 hours have passed after completion of the operation (HTK-48hr-POH24).
   (Hereafter, the above four types of mice were collectively referred to as "mice (1) to (4)," at times.)
   Furthermore, the following mice were prepared as controls.
(5) A mouse, into which an excised heart has been transplanted without being immersed in a preservation solution and 24 hours have passed after completion of the operation (Fresh); and
(6) A mouse, which has not been subjected to a transplantation operation (Naive).

With regard to each of the above described mice, blood was collected from each mouse, and serum was then extracted from the blood. Regarding the thus obtained serum, the amounts of CPK (creatine phosphokinase) and LDH (lactic acid dehydrogenase), which were used as indicators for damage to cells, were measured. CPK was measured using FUJI DRI-CHEM SLIDE CPK-PIII (manufactured by FUJIFILM CORPORATION), and LDH was measured using FUJI DRI-CHEM SLIDE LDH-PIII (manufactured by FUJIFILM CORPORATION). The results are shown in Figure 8.

### (Result 6)

As is clear from Figure 8, the amount of LDH generated in the serum was significantly smaller in c-48hr-POH24 than in HTK-48hr-POH24 (see Figure 8(a)). In addition, the amount of CPK generated in the serum was also smaller in c-48hr-POH24 than in HTK-48hr-POH24 (see Figure 8(b)). In terms of the amount of LDH generated in the serum and the amount of CPK generated in the serum, there was no difference between c-24hr-POH24 and HTK-24hr-POH24. From the aforementioned results, it was confirmed that, when an excised heart was immersed in the preservation solution for 48 hours, generation of LDH in the serum was significantly suppressed in a mouse subjected to heterotopic transplantation of the heart immersed in the preservation solution (c), rather in a mouse subjected to heterotopic transplantation of the heart immersed in the HTK solution, and that generation of CPK in the serum was also suppressed.

### Example 7

### (Studies regarding effect of long-term survival percentage of transplanted heart)

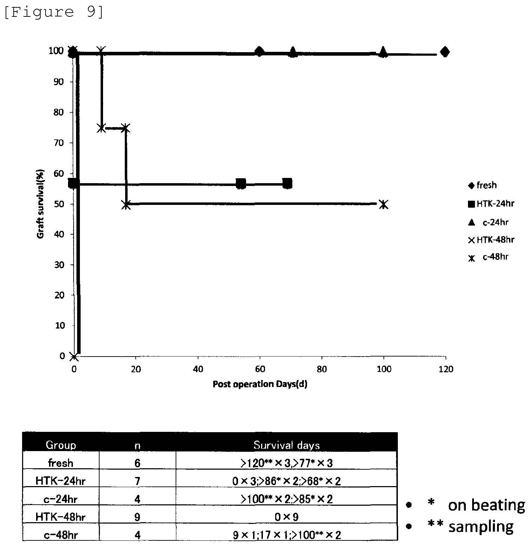

With regard to each of the above described mice (1) to (4) and a mouse into which an excised heart had been transplanted without being immersed in a preservation solution and 24 hours had passed after completion of the operation (fresh), until when the transplanted heart survived was confirmed. The beating of a transplanted heart was confirmed by palpation, and when the beating was terminated, it was considered that the organ was dropped due to termination of the function (did not survive). The beating was confirmed by palpation every day for the first two weeks, and thereafter, the beating was confirmed by palpation twice a week for 2.5 months. The results are shown in Figure 9.

### (Result 7)

As is clear from Figure 9, in the case of mice into each of which an excised heart immersed in the preservation solution (c) for 24 hours had been transplanted and 24 hours had passed after completion of the operation (c-24hr (n = 4)), the transplanted heart survived at a percentage of 100% on the 60th day after the operation. On the other hand, in the case of mice into each of which an excised heart immersed in HTK for 24 hours had been transplanted and 24 hours had passed after completion of the operation (HTK-24hr (n = 7)), the survival percentage remained at slightly more than 50%. Moreover, in the case of mice into each of which an excised heart immersed in the preservation solution (c) for 48 hours had been transplanted and 24 hours had passed after completion of the operation (c-48hr (n = 4)), the transplanted heart survived at a percentage of 50% even after 60 days. On the other hand, in the case of mice into each of which an excised heart immersed in the HTK solution for 48 hours had been transplanted and 24 hours had passed after completion of the operation (HTK-48hr (n = 0)), all of the transplanted hearts were dropped on the first day (Day 0). From the aforementioned results, it was confirmed that the heart immersed in the preservation solution (c) had a higher long-term survival percentage than the heart immersed in the HTK solution, in both cases of immersion time of 24 hours and that of 48 hours.

### Example 8

### (Studies regarding effect of increasing amount of ATP in transplanted heart)

The excised hearts, which had been prepared in accordance with the procedures described in the above Example 1 (Mouse ectopic heart transplantation 1), were studied in terms of the effect of increasing the amount of ATP.
1) An excised heart immersed in the preservation solution (c) for 24 hours (without transplantation) (c-24hr-w/o OPE) ;
2) an excised heart immersed in the preservation solution (c) for 48 hours (without transplantation) (c-48hr-w/o OPE) ;
3) an excised heart immersed in the HTK solution for 24 hours (without transplantation) (HTK-24hr-w/o OPE);
4) an excised heart immersed in the HTK solution for 48 hours (without transplantation) (HTK-48hr-w/o OPE);
5) a transplanted heart, which had been immersed in the preservation solution (c) for 48 hours and had been then transplanted into a mouse, and 24 hours had passed after completion of the transplantation operation (c-48hr-POH24);
6) a transplanted heart, which had been immersed in the HTK solution for 48 hours and had been then transplanted into a mouse, and 24 hours had passed after completion of the transplantation operation (HTK-48hr-POH24);
7) a transplanted heart, which had been transplanted into a mouse without being immersed in a preservation solution and 24 hours had passed after completion of the transplantation operation (fresh); and
8) a mouse heart immediately after excision, which had not been transplanted (naive).

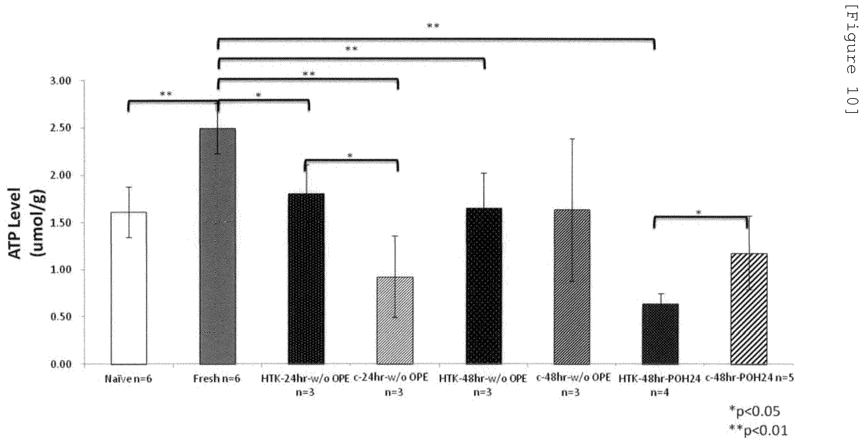

ATP was extracted from each of the above described hearts, using AMERIC-ATP Kit (Cat. 632-23881; manufactured by Wako Pure Chemical Industries, Ltd.), and individual groups were compared with one another in terms of the amount of ATP. The results are shown in Figure 10.

### (Result 8)

As is clear from Figure 10, the amount of ATP extracted from c-24hr-w/o OPE was smaller than that extracted from HTK-24hr-w/o OPE. On the other hand, the amount of ATP extracted from c-48hr-w/o OPE was not significantly different from the amount of ATP extracted from HTK-48hr-w/o OPE. The amount of ATP extracted from c-48hr-POH24 was larger than that extracted from HTK-48hr-POH24. Accordingly, with regard to hearts, which had been immersed in preservation solutions for 48 hours after the excision thereof and had been then transplanted, the amount of ATP extracted from the heart immersed in the preservation solution (c) was larger than that extracted from the heart immersed in HTK.

### Example 9

### (Studies regarding effect of suppressing necrotic portion by tissue staining)

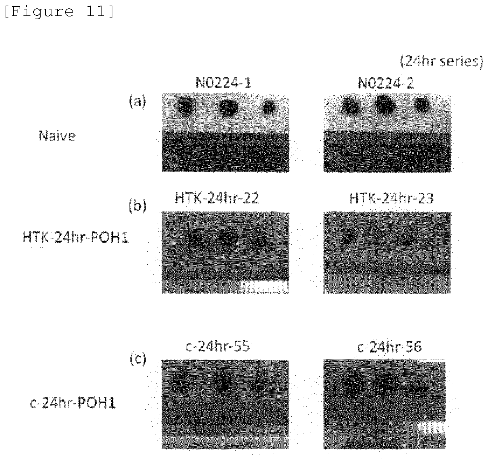

An operation was performed by the same procedures as those in the above Example 5 (Mouse ectopic heart transplantation 5), so as to prepare ectopic heart transplant mice. The hearts of recipient mice (c-24hr-POH1, n = 2), into each of which a heart immersed in the preservation solution (a) for 24 hours had been transplanted and 1 hour had passed, and the hearts of recipient mice (HTK-24hr-POH1, n = 2), into each of which a heart immersed in the HTK solution for 24 hours had been transplanted and 1 hour had passed, were studied in terms of the effect of suppressing a necrotic portion. TTC (2,3,5-triphenyltetrazolium chloride (Cat: 0765; manufactured by AMRESCO LLC)) staining was carried out to stain only a healthy portion of tissues red, and the surface area of a necrotic portion that was not stained and remained white was compared. As controls, hearts that were immediately after excision and had not been transplanted were used (naive, n = 2). Figures 11 (a) to (c) each show a photograph of the inside of a heart that was divided into three parts (EOS, manufactured by Canon Inc.).

### (Result 9)

As is clear from Figure 11, when compared with the heart of HTK-24hr-POH1 (Figure 11 (b)), the heart of c-24hr-POH1 (Figure 11 (c)) had a small white portion that exhibited necrosis, and thus, it was confirmed that immersion of the excised heart in the preservation solution (c) prevents the transplanted heart from necrosis, more strongly than immersion of the excised heart in the HTK solution.

### Example 10

### (Studies by tissue staining)

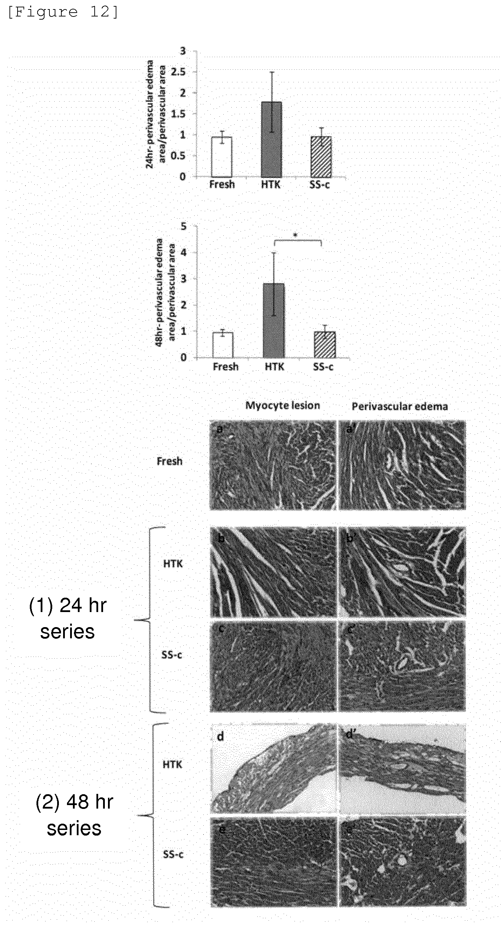

The excised heart, which had been prepared in accordance with the procedures described in the above Example 5 (Mouse ectopic heart transplantation 5), was observed by tissue staining. With regard to a transplanted heart, which had been transplanted into a mouse without being immersed in a preservation solution and 24 hours had passed after completion of the transplantation operation (fresh); a heart of a recipient mouse (HTK-24hr-POH24 or HTK-48hr-POH24), into which a heart immersed in the HTK solution for 24 or 48 hours had been then transplanted and 24 hours had passed; and a heart of a recipient mouse (c-24hr-POH24 or c-48hr-POH24), into which a heart immersed in the preservation solution (c) for 24 or 48 hours had been then transplanted and 24 hours had passed, a fixed section was produced, and H/E (hematoxylin/eosin) staining, which is a method to stain the nucleus blue and the cytoplasm red-purple, was performed on each section. The conditions of cardiac muscles were compared with one another by microscopic observation at a magnification of ×200. The results obtained by staining myocyte lesions are shown in left photographs (Myocyte lesion; a-e) in Figure 12 (lower photographs), and the results obtained by staining perivascular edemas are shown in right photographs (Perivascular edema; a'-e') in Figure 12 (lower photographs). In addition, the ratio of a perivascular edema region to a perivascular region is shown in Figure 12 (upper graphs).

### (Result 10)

As is clear from Figure 12 (lower photographs), in terms of edemas between myocardial fibers, the rupture of myocardial fibers, the disappearance of the necrotic myocardial cell nucleus, infiltration of neutrophils, and the like, it was confirmed that both myocardial lesions and perivascular edemas were reduced in the heart of c-24hr-POH24 or c-48hr-POH24, compared with the heart of HTK-24hr-POH24 or HTK-48hr-POH24. Moreover, from Figure 12 (upper graphs), it is found that the ratio of the perivascular edema region to the perivascular region was significantly decreased in the heart of c-24hr-POH24 or c-48hr-POH24, compared with the heart of HTK-24hr-POH24 or HTK-48hr-POH24.

### Example 11

### (Studies regarding effect of suppressing macrophage accumulation)

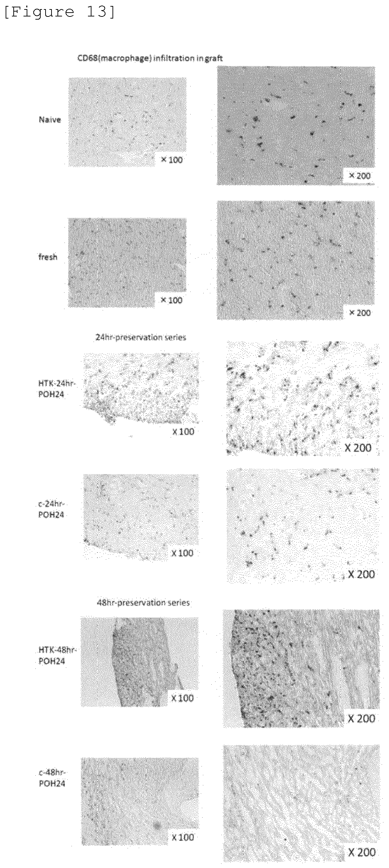

With regard to the transplanted hearts of the above described mice (1) to (4), a fixed section was produced from each heart, and using an anti-CD68 antibody (clone: FA-11, manufactured by BioLegend, Inc.), each section was stained bluish purple according to an enzyme antibody method. The distribution of CD68-positive macrophages was observed under a microscope at a magnification of ×200, and the sections were compared with one another in terms of the number of macrophages accumulated in the tissues. Accumulation of macrophages in the tissues suggests that the tissues became inflamed. As controls, a heart that was immediately after excision and had not been transplanted (naive) and a heart of a mouse, into which an excised heart had been transplanted without being immersed in a preservation solution and 24 hours had passed (fresh) were used. The results are shown in Figure 13.

### (Result 11)

As is clear from Figure 13, the density of CD68-positive macrophages stained bluish purple was smaller in the heart of c-24hr-POH24 than in the heart of HTK-24hr-POH24, and thus, accumulation of macrophages in the heart of c-24hr-POH24 was lower than that in the heart of HTK-24hr-POH24. Also, the aforementioned density was smaller in the heart of c-48hr-POH24 than in the heart of HTK-48hr-POH24, and thus, accumulation of the macrophages in the heart of c-48hr-POH24 was lower than that in the heart of HTK-48hr-POH24. Therefore, it was confirmed that inflammation in the tissues is suppressed more strongly with the use of the preservation solution (c) as a preservation solution for immersion of the excised heart, than with the use of the HTK solution, in both cases where the time required for immersion of the excised heart in the preservation solution was 24 hours and 48 hours.

### Example 12

### (Studies regarding effect of suppressing cell death)

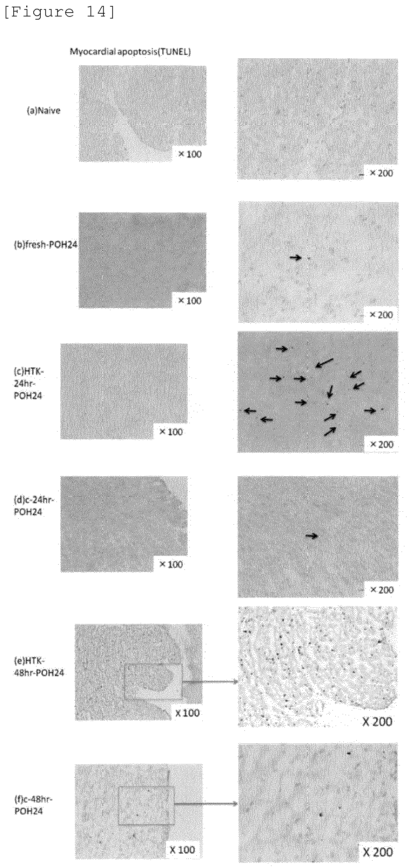

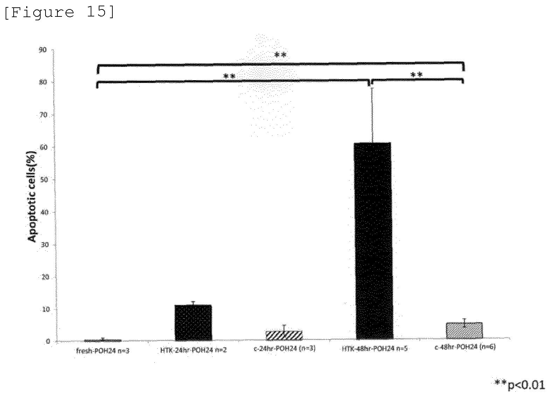

With regard to the transplanted hearts of the above described mice (1) to (4), a fixed section was produced from each heart, and the effect of suppressing cell death was studied. TUNEL (Terminal deoxynucleotidyl transferase dUTP nick end labeling) staining that was used to stain apoptotic cells bluish purple was performed on each section, using CardioTACS in situ Apoptosis Detection Kit (Trevigen Inc., Cat. 4827-30-K). Thereafter, the sections were observed under a microscope at magnifications of ×100 and ×200, and the sections were compared with one another in terms of the number of TUNEL-positive cells. In addition, the number of stained apoptotic cells was counted in any given 9HPF/sample (≥3 mice/group), and the ratio of the apoptotic cells in the total cells was calculated and compared. As controls, a heart that was immediately after excision and had not been transplanted (naive) and a heart of a mouse, into which an excised heart had been transplanted without being immersed in a preservation solution and 24 hours had passed (fresh) were used. The results are shown in Figure 14 and the graph of Figure 15.

### (Result 12)

As is clear from Figure 14, in terms of the amount of bluish purple, there was no significant difference between the heart of c-24hr-POH24 (see Figure 14(d)) and the heart of HTK-24hr-POH (see Figure 14(c)). However, the amount of such bluish purple was significantly larger in the heart of HTK-48hr-POH24 (see Figure 14(e)) than in the heart of c-48hr-POH24 (see Figure 14(f)). In addition, as is clear from Figure 15, the ratio of apoptotic cells was significantly higher in the heart of HTK-48hr-POH24 than in the heart of c-48hr-POH24 or the fresh heart. Therefore, it was confirmed that, when the time in which the excised heart is immersed is 48 hours, apoptosis is significantly suppressed with the use of the preservation solution (c) as a preservation solution, rather than with the use of the HTK solution.

### Example 13

### (Studies regarding effect of suppressing DNA damage in cells)

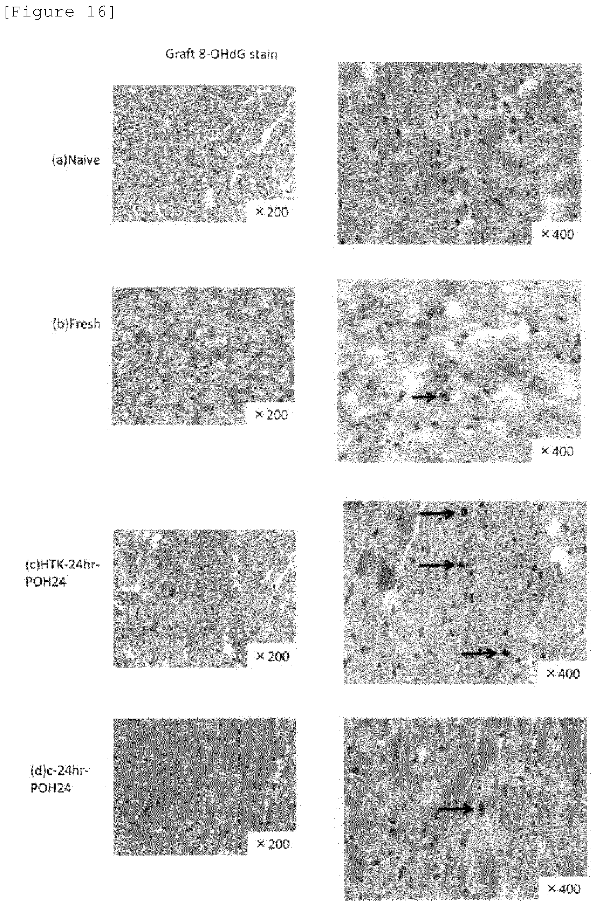

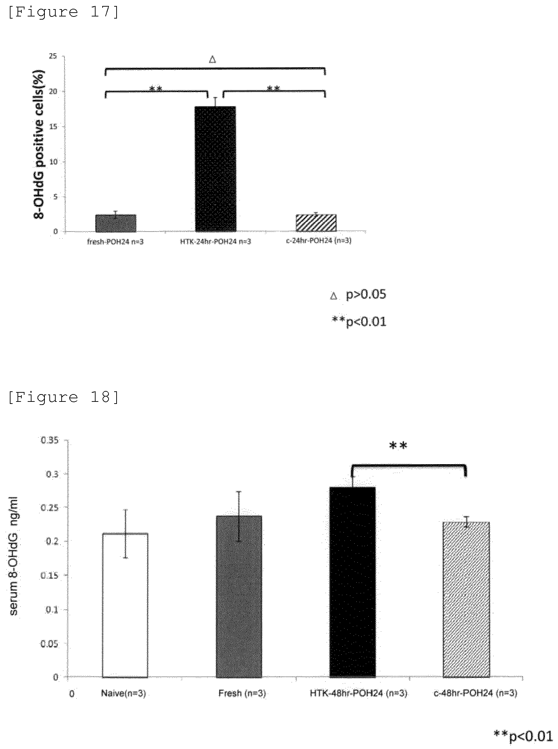

With regard to the heart of each mouse (c-24hr-POH24 or HTK-24hr-POH24), into which an excised heart immersed in the above described preservation solution (c) or HTK solution for 24 hours had been transplanted and 24 hours had passed after completion of the operation, a fixed section was produced from each heart, and the effect of suppressing DNA damage was studied. The section was stained with an anti-8-OHdG antibody that was used to stain the nucleus brown according to an enzyme antibody method (MOG-100P, Japan Institute for Control of Aging, NIKKEN SEIL Co., Ltd.), and it was simultaneously stained also with hematoxylin that was used to stain the nucleus blue. The resulting sections were observed under a microscope at magnifications of ×100 and ×200, and were compared with one another in terms of the number of 8-OHdG-positive cells. It is to be noted that 8-OHdG is a DNA damage marker and indicates the degree of cell damage by active oxygen. As controls, a heart that was immediately after excision (naive) and a heart that had been transplanted into a mouse immediately after excision and 24 hours had passed (fresh-POH24) were used. Moreover, the number of stained 8-OHdG-positive cells in any given 9HPF/sample (≥3 mice/group) was counted, and the ratio of the stained 8-OHdG-positive cells in the total cells was calculated. The results are shown in the stained views of Figure 16 and the graph of Figure 17.

### (Result 13)

As is clear from Figure 16, the number of 8-OHdG-positive cells stained brown was smaller in the heart of c-24hr-POH24 (see Figure 16(d)) than in the heart of HTK-24hr-POH24 (see Figure 16(c)), and thus, DNA damage was suppressed more strongly in the heart of c-24hr-POH24 than in the heart of HTK-24hr-POH24. In addition, as is clear from Figure 17, the number of the stained 8-OHdG-positive cells was significantly larger in HTK-24hr-POH24, than in c-24hr-POH24 or fresh-POH24, and thus, it was confirmed that, when the time required for immersion of an excised heart is 24 hours, DNA damage by active oxygen is more significantly suppressed with the use of the preservation solution (c) as a preservation solution, than with the use of the HTK solution. It is to be noted that there are no data in the case where the time required for immersion of an excised heart was 48 hours, since the background became high due to destruction of myocardial tissues and positive cells could not be counted.

### Example 14

### (Studies regarding effect of suppressing DNA damage in serum)

With regard to mice (c-48hr-POH24 or HTK-48hr-POH24), into each of which an excised heart immersed in the above described preservation solution (c) or HTK solution for 48 hours, and 24 hours had passed after completion of the operation, blood was collected from each mouse, serum was extracted from the blood, and the effect of suppressing DNA damage was studied. Blood was collected from each mouse, and serum was extracted from the blood. The amount of 8-OHdG in the serum was measured and compared using Highly Sensitive ELISA Kit for 8-OHdG (KOG-HS10/E, Japan Institute for Control of Aging, manufactured by NIKKEN SEIL Co., Ltd.). As controls, a mouse that was not subjected to the transplantation operation (Naive) and a mouse into which a heart was transplanted immediately after excision and 24 hours had then passed (Fresh) were used. The results are shown in Figure 18.

### (Result 14)

As is clear from Figure 18, it was confirmed that, when the time required for immersion of an excised heart is 48 hours, DNA damage is more significantly suppressed with the use of the preservation solution (c) as a preservation solution, than with the use of the HTK solution.

### Example 15

### (Studies regarding change in expression of inflammation and/or oxidation stress marker genes (quantitative RT-PCR))

With regard to transplanted hearts of mice (c-48hr-POH24 or HTK-48hr-POH24), into each of which an excised heart immersed in the above described preservation solution (c) or HTK solution for 48 hours had been then transplanted, and 24 hours had passed after completion of the operation, tissues were crushed, and total RNA was then extracted from the tissues. cDNA was reversely transcribed using PrimeScript (registered trademark) RT reagent Kit (manufactured by TAKARA BIO INC.), and using Premix Ex Taq (trademark) (manufactured by TAKARA BIO INC.), the hearts were compared according to quantitative RT-PCR in terms of the expression of a gene group associated with inflammation and/or oxidation stress.

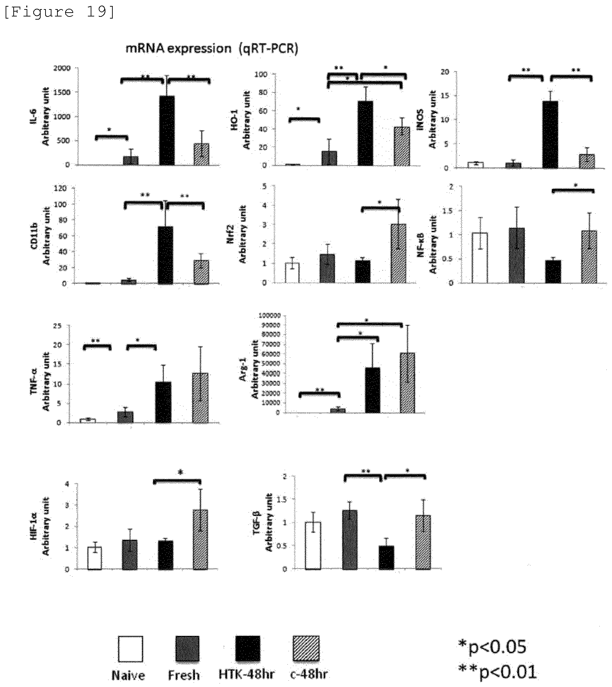

As untreated groups, a heart immediately after excision (naive), and a heart of a mouse, into which a heart was transplanted immediately after excision and 24 hours had passed (fresh), were used. The results are shown in Figure 19. In Figure 19, regarding IL-6, individual bars indicate, from the left, Naive (n = 5), Fresh (n = 3), HTK-48hr-POH24 (n = 5), and c-48hr-POH24 (n = 4); regarding HO-1, individual bars indicate, from the left, Naive (n = 6), Fresh (n = 3), HTK-48hr-POH24 (n = 4), and c-48hr-POH24 (n = 5); regarding iNOS, individual bars indicate, from the left, Naive (n = 6), Fresh (n = 3), HTK-48hr-POH24 (n = 4), and c-48hr-POH24 (n = 5); regarding CD11b, individual bars indicate, from the left, Naive (n = 6), Fresh (n = 3), HTK-48hr-POH24 (n = 4), and c-48hr-POH24 (n = 4); regarding Nrf2, individual bars indicate, from the left, Naive (n = 6), Fresh (n = 3), HTK-48hr-POH24 (n = 3), and c-48hr-POH24 (n = 5); regarding NF-kB, individual bars indicate, from the left, Naive (n = 6), Fresh (n = 3), HTK-48hr-POH24 (n = 3), and c-48hr-POH24 (n = 5); regarding TNF-α, individual bars indicate, from the left, Naive (n = 6), Fresh (n = 3), HTK-48hr-POH24 (n = 3), and c-48hr-POH24 (n = 5); regarding Arg-1, individual bars indicate, from the left, Naive (n = 6), Fresh (n = 3), HTK-48hr-POH24 (n = 3), and c-48hr-POH24 (n = 5); regarding HIF-1α, individual bars indicate, from the left, Naive (n = 6), Fresh (n = 3), HTK-48hr-POH24 (n = 3), and c-48hr-POH24 (n = 5); and regarding TGF-β, individual bars indicate, from the left, Naive (n = 6), Fresh (n = 3), HTK-48hr-POH24 (n = 3), and c-48hr-POH24 (n = 5).

### (Result 15)

The items, regarding which the heart of c-48hr-POH24 exhibited significantly lower values than the heart of HTK-48hr-POH24, are IL-6: an inflammatory cytokine gene, HO-1: an antioxidant protein gene, iNOS: an antioxidant protein gene, and CD11b: a marker gene for macrophages that are accumulated in damaged sites. On the other hand, the items, regarding which the heart of c-48hr-POH24 exhibited significantly higher values than the heart of HTK-48hr-POH24, are Nrf2, NF-kB, and HIF-1α: transcriptional factors associated with cellular stress response, and TGF-β: an inflammation-inhibiting cytokine gene. As a result, it was suggested that inflammation is suppressed by using the preservation solution (c) as a preservation solution.

### Industrial Applicability

The present invention is useful in the medical field of organ transplantation.

## Claims

1. An organ preservation solution comprising a mixture of potassium chloride, disodium hydrogen phosphate, sodium dihydrogen phosphate, L-ascorbic acid, L-ascorbic acid phosphate ester, and D-glucose.

2. The organ preservation solution according to claim 1, wherein the mixture further comprises glycine.

3. The organ preservation solution according to claim 2, wherein the mixture further comprises L-cysteine.

4. The organ preservation solution according to claim 3, wherein the mixture further comprises an iron compound.

5. The organ preservation solution according to any one of claims 1 to 4, wherein a concentration of the L-ascorbic acid in the mixture is 0.2 to 0.3 mM, and a concentration of the L-ascorbic acid phosphate ester in the mixture is 0.4 to 0.5 mM.

6. The organ preservation solution according to any one of claims 1 to 5, wherein a concentration of the disodium hydrogen phosphate in the mixture is 35 to 50 mM, and a concentration of the sodium dihydrogen phosphate in the mixture is 12 to 18 mM.

7. The organ preservation solution according to any one of claims 1 to 6, wherein the D-glucose is mixed to achieve an osmotic pressure of 326 to 363 mOsm/kg.

8. The organ preservation solution according to any one of claims 2 to 7, wherein a concentration of the glycine in the mixture is 5 to 15 mM.

9. The organ preservation solution according to any one of claims 3 to 8, wherein a concentration of the L-cysteine in the mixture is 0.5 to 0.7 mM.

10. The organ preservation solution according to any one of claims 4 to 9, wherein the iron compound is ferrous sulfate.

11. A method for preserving an organ using an organ preservation solution according to any one of claims 1 to 10.
